# EUROPÄISCHE PATENTANMELDUNG

(11) **EP 1 531 570 A2**
(43) Veröffentlichungstag der Anmeldung: **18.05.2005**
(21) Anmeldenummer: 04024177.0
(22) Anmeldetag: 11.10.2004
(51) Int. Cl.: H04L 1/00, H04Q 7/20, H04L 12/00

(54) **Verfahren zur Verbesserung der Wiedergabequalität bei paketorientierter Übertragung von Audio-/Video-Daten**

(30) Priorität: 13.11.2003 DE 10353793
(71) Anmelder: Deutsche Telekom AG, 53113 Bonn (DE)
(72) Erfinder: Feiten, Bernhard, Dr., 13437 Berlin (DE)

(57) **Zusammenfassung**

Bei der Übertragung von Audio-/Video-Signalen in modernen Telekommunikationsnetzen kommt es häufig zu starken Schwankungen der Übertragungskapazität. Gelegentlich können sogar Übertragungspausen auftreten. Für die Verbesserung der Wiedergabe wird nachfolgendes Verfahren vorgeschlagen, das sowohl bei GSM-Netzen und künftigen UMTS-Netzen als auch für das Festnetz angewendet werden kann. Bei skalierbaren Codierverfahren für die Audio- und Videoübertragung wird der Bitstrom in einen Basis-Bitstrom und eine definierte Anzahl von Enhancement-Bitströmen zerlegt. Das Verfahren schlägt vor, den Basis-Bitstrom, der eine vollwertige Wiedergabe garantiert, vorrangig zu übertragen. Enhancement-Bitströme werden nur in dem Maße übertragen, wie es die verfügbare Übertragungsbitrate im Netz zulässt. Die vorrangige Übertragung des Basis-Bitstromes ermöglicht einen schnellen Start der Wiedergabe. Zur Überbrückung von Übertragungspausen wird der Basis-Bitstrom in einem Puffer abgelegt.

## Beschreibung

Die Erfindung betrifft das Gebiet der paketorientierten Übertragung von Audio- und Videosignalen in Kommunikationsnetzen.

Die paketorientierte Datenübertragung in Mobilfunknetzen auf der Basis von GPRS- und IP-Protokollen ist geprägt durch starke Schwankungen der Übertragungskapazität. Zusätzlich treten gelegentlich längere Pausen auf, in denen keine Daten übertragen werden. Die Laufzeit der Pakete ist im Vergleich zu anderen Übertragungsnetzen (z.B. Festnetzen) sehr hoch. Die Qualität der Übertragung ist schwer vorhersagbar. In GSM-Netzen und künftig in UMTS-Netzen werden GPRS- und IP-Protokolle auch zur Übertragung von Audio- und Video-Signalen verwendet.

Die paketorientierte Übertragung basiert auf den IP-Protokollen UDP [ J. Postel: User Protocol (UDP): IETF-NWG RFC 768, 1980, 3p], TCP [ J. Postel: Transmission Control Protocol (TCP): IETF-NWG RFC 793, 1981, 85p] und RTP/RTCP [H. Schulzrinne, S. Casner, R. Frederick and V. Jacobson (RTP): a transport protocol for real-time applications; Request for Comments (Proposed Standard) RFC, 1989, Internet Engineering Task Force, January 1996].

Protokolle wie TCP oder RTP/RTCP steuern über einen Rückkanal vom Kunden zum Server die Übertragung. Bei TCP werden zum Beispiel verlorengegangene Pakete erneut angefordert. Für RTP sind verschiedene Varianten für die Payload für verschiedene Audio- und Video-Codecs spezifiziert. Das zu RTP gehörige Real-Time Transport Control Protocol (RTCP) ermöglicht die Erfassung von Daten über die Qualität der Verbindung. Die Anzahl der verlorenengegangenen Pakete, das Jitter und die Round-Trip-Time können erfasst werden. Verlorene Pakete können erneut angefordert werden. Bei Bedarf kann die Verbindung angepasst werden. Zum Beispiel kann von einem Codec mit hoher Bitrate auf ein Codec mit niedriger Bitrate umgeschaltet werden. Eine dynamische Anpassung der Bitrate an die Übertragungsgegebenheiten ist mit diesen Protokollen jedoch nicht möglich, so dass bei Schwankungen der Übertragungskapazität die Wiedergabe der Audio-/Videodaten nachhaltig beeinflusst wird.

Die Erfindung stellt sich die Aufgabe, ein Verfahren für die Übertragung von Audio- und Videodaten in Kommunikationsnetzen anzubieten, mit dem auch bei Schwankungen der Übertragungskapazität eine qualitativ bessere Wiedergabe möglich ist.

Das neue Verfahren optimiert die Qualität der Audio- und Videoübertragung nach drei Hauptkriterien:
1. Die Wiedergabe soll möglichst schnell gestartet werden können.
2. Pausen in der Übertragung sollen nicht zu einer Unterbrechung der Wiedergabe führen.
3. Bei einer schwankenden übertragungsbitrate passt sich die Audio-/Video-Signalbitrate automatisch an die verfügbare Übertragungsrate des Netzes an.

Aus dem zweiten Kriterium ergibt sich zusätzlich die Forderung, dass im Falle einer Pause bei der Übertragung der Übertragungskanal nicht mit Datenpaketen verstopft werden darf, die für eine korrekte Wiedergabe ohnehin nicht mehr genutzt werden können.

Mit skalierbaren Codierverfahren für Audio- und Videosignale kann die Bitrate dynamisch an die verfügbare Kanalkapazität angepasst werden. Skalierbare Audio- und Video-Codecs sind bekannt und wurden von der ISO SC29WG11 Moving Pictures Expert Group (MPEG) standardisiert [ISO/IEC 14496: Coding of Audiovisual Objects. MPEG-4].

Charakteristisch für skalierbare Codierungsverfahren zur Audio- und Videoübertragung ist, dass der Bitstrom in einen Basis-Bitstrom (Basis-Layer) und eine Anzahl n-1 von Enhancement-Bitströmen (Enhancement-Layer) aufgeteilt wird (siehe z.B. MPEG-4 Audio AAC-BSAC). Der Basis-Bitstrom garantiert bereits eine vollwertige Audio- bzw. Videowiedergabe. Die Qualität der Übertragung ist um so besser, je mehr Bitströme wiedergegeben werden.

Die Erfindung macht sich einen skalierbaren Audio- oder Video-Bitstrom zu Nutze. Ein skalierbarer Audio-/Video-Bitstrom ist durch eine Folge von Frames der Framedauer T_{f}. gegeben. Die das Audio- oder Videosignal beschreibende Information innerhalb des Frames lässt sich in das Basis-Layer und die Enhancement-Layer zerlegen.

Die genaue Zusammensetzung eines Frames ist Codec-spezifisch. Ein Frame kann zum Beispiel aus mehren Audio-/Video-Frames mit einer Subframedauer von 20 ms bestehen. Die Größe des Basis-Layer und die Anzahl und Schrittweite der Enhancement-Layer ist ebenfalls Codec-spezifisch. Für das beschriebene Verfahren ist die genaue Zusammensetzung des Frames unerheblich. Das Übertragungsverfahren kann an das jeweilige Codierungsverfahren angepasst werden. Zum Beispiel kann die Framedauer variabel gestaltet werden, wodurch sich ein weiterer Freiheitsgrad ergibt. Anderseits kann auch die Größe der Enhancement-Layer variabel angepasst werden.

Das vorliegende Verfahren definiert ein Übertragungsschema für skalierbare, paketierte Audio- und Videobitströme in der Weise, dass der Basis-Bitstrom vorrangig übertragen wird und Enhancement-Bitströme nur in dem Maße übertragen werden, wie es die Kapazität des Übertragungskanals zulässt. Das Endgerät stellt den Glient dar, der von einem Server hinsichtlich des angeforderten Audio-/Video-Stromes bedient wird.

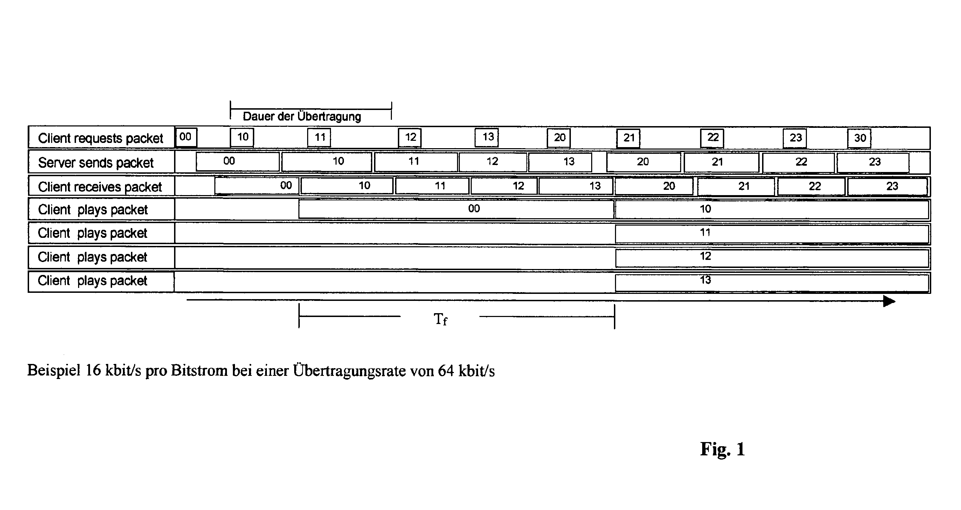

Charakteristisch für das beschriebene Verfahren ist, dass alle Pakete vom Client explizit angefordert werden. Nach dem Empfang des ersten Paketes vom Basis-Bitstrom kann die Wiedergabe gestartet werden. Gleichzeitig wird das nächste Paket vom Basis-Bitstrom angefordert und danach die Anzahl von Paketen der Enhancement-Bitströme, die im Rahmen der verfügbaren Kanalkapazität möglich sind (siehe Fig. 1).

Ein skalierbarer Audio-/Video-Bitstrom kann beispielsweise aus einem Basis-Bitstrom und drei Enhancement-Bitströmen (vier Teilströme) mit je 16 kbit/s bestehen und der Frame die zeitliche Länge für eine Wiedergabedauer von 1 Sekunde haben. Steht z.B. eine Übertragungsrate von 64 kbit/s zur Verfügung, dann dauert die Übertragung des Basis-Bitstroms des 0-ten Frames 250 ms. Der Abspielvorgang kann also nach 250 ms beginnen und für eine Sekunde andauern. Nachdem der Empfang des 0-ten Paketes des Basis-Bitstroms begonnen hat, wird der Basis-Bitstrom des 1-ten Frames angefordert. Im Anschluss daran werden die Enhancement-Bitströme des 1-ten Frames angefordert. Aus der Übertragungsdauer kann nun berechnet werden, ob alle vier Teilströme übertragen werden können.

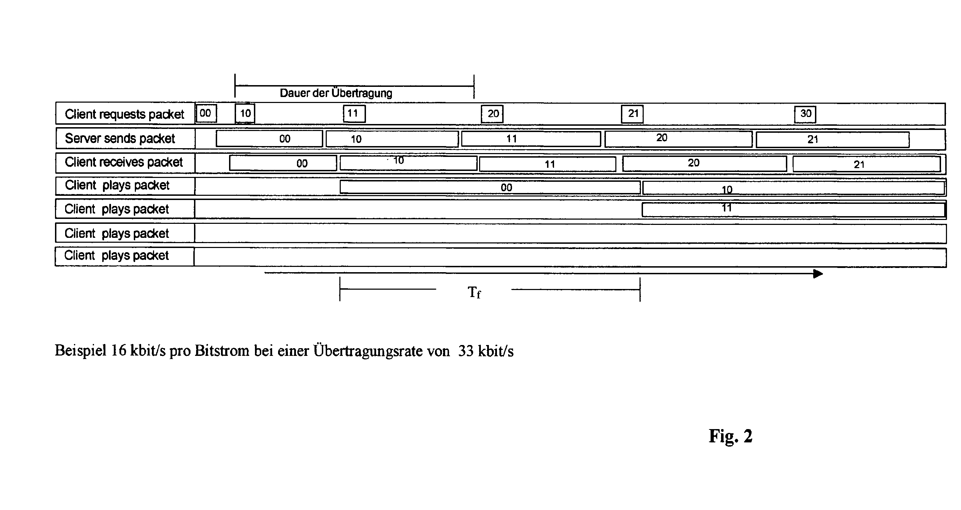

Können aufgrund einer eingeschränkten Übertragungskapazität (längere Übertragungszeiten) keine Pakete von den Enhancement-Bitströmen übertragen werden, fordert der Client das nächste Paket vom Basis-Bitstrom an und präferiert auf diese Weise den Basis-Bitstrom für die Wiedergabe (siehe Fig. 2).

Dauert zum Beispiel die Übertragung des 16 kbit/s Basis-Bitstromes bereits 450 ms, weil die Übertragungsrate nur etwas oberhalb von 32 kbit/s liegt, ist abzusehen, dass der erste Enhancement-Bitstrom noch übertragen werden kann. Der zweite Enhancement-Bitstrom wird aber nicht mehr angefordert, sondern es wird der Basis-Bitstrom des 2-ten Frames angefordert.

Die Anzahl der übertragenen Pakete und damit die Bitrate werden so an die verfügbare Kapazität des Übertragungskanals angepasst. Auf diese Weise wird auch verhindert, dass nach einer Übertragungspause der Kanal mit Paketen verstopft wird, die für eine korrekte Wiedergabe keine Bedeutung mehr haben. Auftretende Übertragungspausen werden bei der Wiedergabe durch den gepufferten Basis-Bitstrom überbrückt.

Zusätzlich können Einzelpaket-Verluste von wichtigen Basis-Layem durch eine erneute Anforderung (Repetition-Request) kompensiert werden. Einzelpaket-Verluste von Enhancement-Layern führen zwar zu geringerer Wiedergabequalität, die aber toleriert werden kann.

Bündelfehler können überbrückt werden, indem in einer Übertragungspause der gepufferte Basis-Bitstrom ausgespielt wird. Die Enhancement-Bitströme werden dann nicht angefordert, sondern der Basis-Bitstrom des nächsten Frames.

Die Übertragung der Audio- und Videosignale wird also in der Weise optimiert, dass die Wiedergabe schnell gestartet werden kann und Übertragungspausen nicht zu Unterbrechungen der Wiedergabe führen. Bei dem schnellen Start ist die subjektive Qualität zunächst eingeschränkt, da nur Pakete des Basis-Bitstromes zur Verfügung stehen. Das erfindungsgemäße Verfahren ermöglicht einen Quickstart bei reduzierter Qualität. Pakete der Enhancement-Bitströme werden in dem Maße übertragen, wie es die Kapazität der Übertragungsstrecke zulässt. Bei hinreichender Bandbreite des Übertragungskanals wird die subjektive Qualität dann im zweiten Frame die volle Qualität liefern. Auch in Übertragungspausen fällt die subjektive Qualität der Wiedergabe ab. Das ist aber gegenüber einer Unterbrechung der Wiedergabe vorzuziehen.

## Patentansprüche

1. Verfahren zur Verbesserung der Wiedergabequalität bei paketorientierter Übertragung von Audio-/Video-Daten in GSM-Netzen, künftigen UMTS-Netzen und im Festnetz auf der Basis von skalierbaren Codierverfahren, die einen Basis-Bitstrom und eine definierte Anzahl von Enhancement-Bitströmen verwenden,
**dadurch gekennzeichnet,**
- **dass** der Basis-Bitstrom, der eine vollwertige Audio-/Videowiedergabe garantiert, vorrangig übertragen wird, so dass ein schneller Start der Wiedergabe möglich ist,
- **dass** die vorrangige Übertragung des Basis-Bitstromes bei auftretenden Schwankungen der Übertragungsbitrate im Netz dadurch gewährleistet wird, dass aus der Übertragungsdauer von Basis-Bitstrom oder Enhancement-Bitstrom eines Frames berechnet wird, ob für eine kontinuierliche Wiedergabe weitere Enhancement-Bitströme dieses Frames übertragen werden können oder bereits der Basis-Bitstrom des nächsten Frames angefordert werden muss und dass auf diese Weise die Audio-/Video-Signalbitrate automatisch an die verfügbare Übertragungsbitrate im Netz angepasst wird,
- **dass** der vorrangig übertragene Basis-Bitstrom auf der Empfangsseite einen Puffer füllt, so dass Übertragungspausen aus dem Puffer überbrückt werden können, und
- **dass** bei auftretenden Übertragungspausen der Übertragungskanal nicht mit Datenpaketen verstopft wird, die für eine korrekte Wiedergabe nicht mehr genutzt werden können.

2. Verfahren nach Anspruch 1, **dadurch gekennzeichnet, dass** fehlerhafte Basis-Bitströme erneut angefordert werden können und dann vorrangig übertragen werden.

3. Verfahren nach Anspruch 1, **dadurch gekennzeichnet, dass** die Anzahl der Enhancement-Bitströme pro Frame sowie deren Bitrate an die verfügbare Übertragungsbitrate im Netz angepasst werden können.
